Europäisches Patentamt

European Patent Office

Office européen des brevets

(11) Publication number: 0 350 469
A2

# EUROPEAN PATENT APPLICATION

(21) Application number: 89850143.2

(22) Date of filing: 03.05.89

(51) Int. Cl.5: **A 23 L 1/05**
A 23 L 1/20, A 23 L 1/30,
A 23 L 1/308

(30) Priority: 27.05.88 SE 8801982

(43) Date of publication of application:
10.01.90 Bulletin 90/02

(84) Designated Contracting States:
AT CH DE FR GB LI NL SE

(71) Applicant: SEMPER AB
Box 23142
S-104 35 Stockholm (SE)

(72) Inventor: Strinning, Olof
c/o Semper AB Box 23142
Stockholm (SE)

Sjöberg, Lars Börje
c/o Semper AB Box 23142
Stockholm (SE)

Brunér, Per-Olof
c/o Semper AB Box 23142
Stockholm (SE)

Gebele, Josef
c/o Semper AB Box 23142
Stockholm (SE)

(74) Representative: Avellan-Hultman, Olle
Avellan-Hultman Patentbyra AB P.O. Box 5366
S-102 46 Stockholm 5 (SE)

(54) Tube-fed nourishment and a process for the production thereof.

(57) A tube-fed nourishment as well as a process for the production of it, which tube-fed nourishment is of the whole-diet variety in a known way and contains fats, proteins, carbohydrates, vitamins and minerals, and also contains 0.5-5, preferably 1-3, percent by weight fibers, which belong to the group called vegetable roots, particularly the genus Beta, and have a coarseness of 50-200 μm or preferably 60-150 μm.

EP 0 350 469 A2

Description

The present invention generally relates to a tube-fed nourishment and a process for the production thereof.

During various illnesses, when a patient is not able to eat his food in an ordinary way, nourishment must be administered to the patient by means of drip or via a tube through the gastrointestinal tract. The latter method is preferred, provided the gastrointestinal tract is functioning, since it is practical, restful to the patient and economical.

For this purpose suitable liquid tube-fed nourishments in the form of whole-diet products have been available for several years, which comprise fats, proteins, carbohydrates, vitamins, minerals etc. Several known tube-fed nourishments of this type have been thinly fluid products having a low viscosity and being based on e.g. soya, milk proteins etc.

It is known that fibers of various types are beneficial, because they regulate the bowel function by preventing constipation as well as diarrhoea, they also increase the flow speed of the food through the bowel, they can suppress blood sugar peaks in certain cases, which normally occur when eating food, and they form, by influencing the intestinal flora in certain cases, fatty acids, which protect the bowel against irritation. Also, fibers may lower the cholesterol content of the blood.

Edible fibers are soluble as well as insoluble and each one of these two types has a favorable influence on the patient.

The insoluble fibers, which are slowly digested in the bowel, contribute i.a. to preventing a constipation. The probable cause of this is that the volume of the bowel con tents increases and its flow speed increases. Also, they can counteract diarrhoea, probably because the insoluble fibers bind water in the bowel.

It has been clearly proven that the soluble fibers can eliminate or at least suppress blood sugar peaks, which usually occur when a person is eating food, and they can lower the cholesterol content of the blood.

One type of known tube-fed nourishment contains a low content of insoluble fibers, e.g. ground wheat bran, ground cellulose etc., but on the other hand a very small content of soluble fibers. This type of tube-fed nourishment has no blood sugar reduction effect and consequently is unsuitable e.g. for diabetics.

An admixture of soluble fibers to the tube-fed nourishment would, as has been mentioned above, result in substantial advantages. Some insoluble fibers may also have minor side-effects, which might be eliminated, provided the insoluble fibers were combined with a certain amount of soluble fibers.

To admix soluble fibers to the tube-fed nourishment leads to problems, because the soluble fibers bind water, which results in an increase in the viscosity of the tube-fed nourishment and difficulties for the latter, because it is a thick liquid, to flow through the tube, which often is quite thin. It is true that also such thick-bodied tube-fed nourishments, within certain limits, can be administered by means of a pump, but this technique is expensive and complicated. Soluble fibers, which i.a. contain pectin as an essential and important ingredient, usually also are hydrolysable, which may result in a hydrolysis of the fibers during a storing of the tube-fed nourishment and consequently in that the fibers successively will pro duce a worse physiological effect.

Thus, it would be an advantage to be able, in a tube-fed nourishment, to utilize the various phsyiological effects, which soluble and insoluble fibers respectively produce, and if the tube-fed nourishment contained a certain amount of soluble as well as of insoluble fibers, but so far this has resulted in technical problems, mainly due to the fact that the soluble fibers have a tendency to make the tube-fed nourishment so thick-bodied, that it only with difficulty can be fed through the tube, which often is quite thin. It would be particularly advantageous if the soluble as well as the insoluble fibers were provided from the same fiber product.

Such a fiber product is already known, namely a so called soya polysaccharide. It contains a comparatively small amount of soluble fibers and consequently produces a poor, if any at all, blood sugar reduction effect. Also, said soya polysaccharide contains phytic acid, which may interfere with the absorption of the bowel of certain minerals, e.g. zinc and iron.

It is known that certain fiber products contain a larger amount of soluble fibers than said soya polysaccharide and we have now found, which is surprising, that certain specific such fiber-containing products can be admixed to a conventional tube-fed nourishment without a risk that the above-mentioned problems will arise. The reason why it is possible to admix in this way soluble as well as insoluble fibers, both in significant amounts, without a risk that said tube-fed nourishment will turn thick-bodied to such a degree, that it would be impossible to administer it in an ordinary way through a tube, and without a hydrolysis of the soluble fibers when stored, is not completely explained, but the reason may prove to be that said soluble fibers are bound in such a way in or by said insoluble fibers, that they will not be released during their admixture to the tube-fed nourishment or during their storage but of course as soon as they are influenced by the bowel and gastric juices.

Thus, we have found that root vegetables in the same product contain soluble as well as insoluble fibers, which have said desirable effect, e.g. fibers from turnips and Swedish turnips and specifically fibers from the herb genus Beta, e.g. fodder-beet, fodder-sugar beet, sugar-beet, and red beetroot.

The tube-fed nourishment according to the present invention is a tube-fed nourishment known per se, containing fats, proteins, carbohydrates, minerals and vitamins, with an admixture of fibers of one or several root vegetables, particularly fibers of said genus Beta.

Said fibers ought to be present in an amount of 0.5-5 percent by weight, or preferably 1-3 percent by weight. A larger amount of fibers than about 5 percent does not result in a considerably improved effect, and a smaller amount of fibers than 0.5 percent does not result in a sufficient desirable effect. The size of the fibers ought to correspond to a sieve of 50-200 μm or preferably a sieve spacing of 60-130 μm. A spacing of less than 60 μm results in a worse physiological effect (a lower blood sugar reduction effect) of the tube-fed nourishment, possibly due to the release of the soluble fibers from the insoluble fibers, when the fibers are ground to such small dimensions. A spacing of more than 200 μm may result in difficulties for the tube-fed nourishment to flow through the comparatively thin tube, which usually is used, and also there is a risk of a matting together of the fibers. Also, the type of fibers used must withstand a homogenizing process and a UHT-treatment (a temperature treatment of as high as 150°C or more).

The weight of the soluble fibers of the fiber product suitably is more than 30 percent by weight and the insoluble fibers more than 25 %, the remaining portion of the fiber product possibly being starch, sugar, protein, raw fat, mineral substances, ash etc. A fiber product of e.g. sugar-beet may contain a diet fiber content of about 70 percent, the soluble fibers containing about 25 percent pectin and partly soluble fibers of hemicellulose, and the insoluble fibers containing about 20 percent cellulose fibers, about 4 percent lignin and insoluble fibers of hemicellulose.

The product according to the invention is obtained by adding and admixing a fiber product of the type described to a conventional tube-fed nourishment, which is homogenized, UHT-treated, cooled and aseptically packaged as well as stored.

The described fiber product must be added to the conventional tube-fed nourishment in a special way, because otherwise the tube-fed nourishment may obtain a too elevated viscosity and problems will arise as to the flow of the food solution through said tube. Extensive trials have shown that these problems may be avoided by admixing a starch product to the fiber product, previous to the latter's admixture to the tube-fed mourishment, e.g. a hydrolysed corn starch or a sugar, or a soya protein, a whey protein, a milk protein powder. The fiber product is in itself comparatively acid, and furthermore, in order to additionally eliminate the risk of an elevation of the viscosity, caused thereby, when the fibers are added, the pH-value of the fiber product ought to be increased, prior to its addition to the tube-fed nourishment, which may be done by treating the fiber product with a base in an aqueous solution, e.g. sodium or potassium hydroxide, or with a phosphate, the pH-value of the fiber mixture increasing to about 7-7.5.

We have also found, that the homogenization pressure must be lower than the ordinary homogenization pressure, because otherwise the fiber product apparently will be crushed, the result being that the soluble fibers are released at the risk of a reduction in the physiological effect of the tube-fed nourishment. A normal homogenization pressure for protein products usually is about 10-20 MPa, but for the fiber-containing tube-fed nourishment the homogenization pressure preferably ought not to be higher than about 5 MPa.

Tests on healthy as well as on ill people have shown, that a fiber-containing tube-fed nourishment according to the present invention results in a considerably improved bowel function compared to when a conventional fiber-free tube-fed nourishment is fed or a tube-fed nourishment containing merely, or mainly, insoluble fibers, and that such blood sugar peaks, which usually result when food is eaten, also a conventional tube-fed nourishment, have failed to appear or been strongly suppressed.

The present invention will now be described in more detail, with reference to a few examples:

Example 1

In this example we started with a known tube-fed nourishment having a low viscosity and comprising 4.5 % protein (soya protein isolant and whey protein), 5.6 % fat (palm oil and sunflower oil), 13.5 % carbohydrate (hydrolysed corn starch) as well as known and ordinary minerals and vitamins. This tube-fed nourishment was mixed together and to 500 kg of this mixture 10 kg dry beet fibers were added corresponding to 2 percent by weight, having a size of more than about 100 μm, which size allows the fibers to pass, without problems, through an ordinary tube. The size of the fibers was determined by sifting through a sieve having a sieve spacing of 100 μm.

All of it was mixed in a tank, was homogenized at 5 MPa and UHT-treated (Ultra High Temperature) at 150°C for 5 seconds in a way known per se, subsequent to which the tube-fed nourishment was cooled to 20°C and was aseptically packaged and stored at room temperature.

The fiber product had not been processed and had a pH-value of about 4.5. The final product obtained a somewhat higher viscosity than what is desirable, because the fiber product was more acid than the normal pH-value of the tube-fed nourishment, which is 7-7.5, but it was quite usable, particularly when it was fed through the tube by means of a pump.

The prepared fiber-containing tube-fed nourishment was tested for a while on six healthy persons and we found that it improved the bowel function, without any constipation or diarrhoea problems. Significantly smaller blood sugar peaks could be observed, when eating this food, as compared to an ordinary tube-fed nourishment. In order to obtain a reference-value comparative tests were performed on the same six persons, which on that ocassion were fed the conventional tube-fed nourishment described above, without any beet fiber admixture.

When stored for an extended period of time the viscosity of the product increased gradually, possibly because of a certain matting together of the particles during storage.

## Example 2

The process in Example 1 was repeated, but now the fiber product was mixed with a starch, which normally is an ingredient in the standard tube-fed nourishment.

2000 kg fiber-containing tube-fed nourishment were prepared and 100 kg maltodextrin were used, to which 40 kg beet fibers were admixed, which corresponded to 2 percent by weight fibers. The admixture was done in a much more smooth way than in Example 1.

The final product was somewhat less thick-bodied and more easy to handle than the product according to Example 1. As to the rest it had the same satisfactory properties, in all respects, as the tube-fed nourishment in Example 1.

## Example 3

The process in Example 1 was repeated, but now the fiber product, which originally had a pH-value of about 4.5, was mixed with water and treated with NaOH in order to obtain a pH-value of 7.5.

The final product had a lower viscosity than the product in Example 1 and had, as to the rest, in all respects, the same satisfactory properties.

Additional tests were performed with a treatment of the fiber product, using potassium hydroxide, sodium and potassium phosphate to a pH-value of 7-7.5.

## Example 4

In order to ascertain the effect of the homogenization pressure during the preparation of the tube-fed nourishment according to the invention, a product according to Example 2 was prepared, which was homogenized at 10 MPa.

The product obtained a considerably higher viscosity than the product according to Example 2, which had been homogenized at only 5 MPa, the fibers seemed to be crushed and the pectin in the soluble fibers seemed, when they were analyzed, decomposed. The product could only with hesitation be administered, by means of a pump in order to feed it through the tube.

Additional corresponding trials were performed, using a homogenization pressure of 7.5, 4 and 2.5 MPa. The product which was homogenized at 2.5 MPa had an incomplete fat emulsion, while the products homogenized at 4 and 7.5 MPa were substantially equivalent to the product in Example 2. It could be established, that the optimal homogenization pressure was 4-7.5 MPa or preferably about 5 MPa.

## Example 5

In order to ascertain the effect of the coarseness of the fiber material five different trials were conducted in the same manner as in Example 2, but now the coarseness (the grinding grade) of the fiber material was 60 µm, 100 µm, 125 µm, 150 µm and 200 µm.

Fibers having a size of 60 µm obviously had a certain amount of released soluble fibers, which resulted in a certain undesirable reduction of the effect of the product on the blood sugar content, however not to such a degree that the product was deemed unacceptable.

The fibers, which had a size of 100 and 125 µm, had a satisfactory effect in all respects.

The fibers, which had a size of 150 µm, were acceptable but not fully equivalent to the fibers having a size of 100 and 125 µm, and the fibers, which had a size of 200 µm, had a tendency to clog in the tube and cake to fiber lumps.

From this it could be established that the fiber coarseness ought to be between 50 and 200 µm, or preferably between 60 and 150 µm .

## Example 6

In this case products were prepared in the same way as in Example 3, but with various standard tube-fed nourishments, namely a) one tube-fed nourishment based on a soya meal base; b) one fat-reduced tube-fed nourishment based on a soya isolant-whey protein; and c) one tube-fed nourishment based solely on milk proteins.

a) In this case the tube-fed nourishment contained 12 % carbohydrate, mainly hydrolysed corn starch, 5.5 % proteins from soya milk, 3 % fat and the same amount of minerals and vitamins as in Example 3. The product proved to be comparatively thick but acceptable.

b) This fat-reduced tube-fed nourishment contained 18 % carbohydrate, 4.5 % proteins, 0.8 % fat and the same amount of minerals and vitamins as in Example 3. The product proved to be excellent and had the same satisfactory properties as in Example 3.

c) A tube-fed nourishment was prepared in this case exclusively based on milk proteins. This product also proved to have the same satisfactory properties as the product in Example 3 and it was actually somewhat less viscous.

## Claims

1. A tube-fed nourishment, which comprises a basic product of the whole-diet variety, known per se, which contains fats, proteins, carbohydrates, vitamins and minerals, **characterized** in that it contains an admixture of fibers of root vegetables.

2. A tube-fed nourishment according to claim 1, **characterized** in that the fibers are of the soluble as well as the insoluble variety and in that said soluble and insoluble fibers are provided in the same fiber product.

3. A tube-fed nourishment according to claim 1 or 2, **characterized** in that said fibers belong to that group of root vegetables, which include the genus Beta, particularly sugar-beet, fodder-beet and red beetroot.

4. A tube-fed nourishment according to claim 1, 2 or 3, **characterized** in that said fibers have a coarseness of 50-200 µm or preferably 60-150 µm.

5. A tube-fed nourishment according to any of the preceding claims, **characterized** in that said soluble fibers are used in essentially the same amount as or in an amount somewhat higher than said insoluble fibers.

6. A tube-fed nourishment according to any of the preceding claims, **characterized** in that said soluble and insoluble fibers are used in an amount of 0.5-5 percent by weight or preferably 1-3 percent by weight of the final fiber-containing tube-fed nourishment.

7. A tube-fed nourishment according to any of the preceding claims, **characterized** in that said fibers have been treated with a base or a phosphate in order to elevate their pH-value to 7-7.5.

8. A process for the production of a tube-fed nourishment according to any of the preceding claims, which comprises a basic product of the whole-diet variety, which is known per se and contains fats, proteins, carbohydrates, vitamins and minerals with an admixture of fibers, **characterized** in that a tube-fed nourishment is prepared in a way known per se and contains fats, proteins, carbohydrates, minerals and vitamins, to which tube-fed nourishment is administered soluble as well as insoluble fibers of root vegetables, particularly root vegetables of the genus Beta.

9. A process according to claim 8, **characterized** in that said fibers are prepared with a coarseness of 50-200 μm or preferably 60-150 μm.

10. A process according to claim 8 or 9, **characterized** in that said fibers, previous to their admixture to said tube-fed nourishment, are mixed with starch, e.g. hydrolysed corn starch, sugar, soya protein, whey protein, or milk protein powder.

11. A process according to any of claims 8-10, **characterized** in that said fibers, previous to their admixture to said tube-fed nourishment, are treated with a caustic liquor, e.g. sodium or potassium hydroxide, or with a phosphate, in order to elevate the pH-value of the fibers to 7-7.5.

12. A process according to any of claims 8-11, **characterized** in that said tube-fed nourishment, subsequent to the addition of said fibers, is homogenized at a pressure of 40-70 bars, or preferably at about 50 bars, and in that it subsequently is UHT-treated in a known way, cooled and aseptically packaged.